# EUROPEAN PATENT APPLICATION

(11) **EP 4 400 962 A1**
(43) Date of publication of application: **17.07.2024**
(21) Application number: 24150452.1
(22) Date of filing: 04.01.2024
(51) Int. Cl.: G06F 3/12, G06F 11/07

(54) **MANAGEMENT SYSTEM AND METHOD**

(30) Priority: 13.01.2023 JP 2023003447; 23.05.2023 JP 2023084306
(71) Applicant: CANON KABUSHIKI KAISHA, Tokyo 146-8501 (JP)
(72) Inventor: SATO, Yuichiro, Tokyo, 146-8501 (JP)
(74) Representative: Canon Europe Limited

(57) **Abstract**

A management system includes means for identifying part information about one or more parts to be addressed to clear an error occurring in an image processing apparatus and means for providing the identified part information using a market performance. The part information about the one or more parts is provided in order of priority based on the market performance and is provided in such a form that an operation with a possibility of clearing an error and an unnecessary operation are distinguished from each other for each part.

## Description

### FIELD OF THE INVENTION

The present disclosure relates to a system and method for identifying a repair portion for clearing an error or malfunction occurring in an image processing apparatus, such as a printer.

### BACKGROUND OF THE INVENTION

### Description of the Related Art

It is known to provide a system for managing device information and operational information about an image processing apparatus (e.g., "a device"), such as a printer, a multi-function peripheral, or a scanner. Examples of the operational information managed includes errors, alarms, counter information, and log information.

In the known system, a server receives a notification from the device of a malfunction occurring in the device, making it possible to manage details of the occurrence of the malfunction (e.g., the timing of the error, in which device the error has occurred, and the type of error). Further, in recent years, systems have been discussed which can diagnose a malfunction through analysis of details of the malfunction.

According to Japanese Patent Application Laid-Open No. 2020-199704, an image forming apparatus acquires diagnosis information about an error occurring in the image forming apparatus, including information about malfunctioning parts and operations for the error, and further acquires replacement priority information about the malfunctioning parts from a management apparatus. The image forming apparatus further displays guidance for replacement of the malfunctioning parts for the image forming apparatus.

When a device in which a malfunction has occurred needs a replacement part, a worker (e.g., a technician who is able to perform repair and maintenance operations on the device) identifies any parts that may need to be replaced, preorders the parts, and then visits the location where the device is installed. If there is a possibility that a number of parts will need to be replaced, then the worker brings all the parts to the device location, which increases ordering costs and procurement time. In reality, the device may be recovered from the malfunction through a different operation without performing a replacement operation. In this case, the preparatory work performed by the technician before the visit will be redundant. Thus, there is room for improvement in the replacement guidance discussed in Japanese Patent Application Laid-Open No. 2020-199704.

### SUMMARY OF THE INVENTION

The present disclosure is directed towards providing a system (and/or method) for identifying information about one or more operations for recovering a malfunctioning device. The system further identifies information about one or more target parts, together with a priority of addressing (e.g., the one or more operations), including a possibility of performing an operation other than part replacement.
The system may be provided with a means for identifying part information about one or more parts to be addressed in order to clear an error occurring in an image processing apparatus. The system may further comprise a means for providing the identified part information using market performance information (e.g., a market performance value corresponding to at least one or each of the one or more replacement parts). The part information about the one or more parts may be provided in order of priority based on the market performance. The part information may be provided in such a form that an operation with a possibility of (a) clearing an error and (b) performing an unnecessary operation are distinguished from each other for at least one (or each) of the one or more parts.

According to a first aspect of the present disclosure, there is provided a management system comprising an identification means for identifying, based on error information about a plurality of errors that have occurred in an image processing apparatus and error information about an error occurring in the image processing apparatus, part information about one or more parts to be addressed to clear the error occurring in the image processing apparatus; and a provision means for providing the part information identified by the identification means using a market performance for managing the number of operations previously performed to clear an error in association with an operation target part and the error, wherein the part information about the one or more parts is provided in order of priority based on the market performance, and the part information is provided in such a form that an operation with a possibility of clearing the error and performing an unnecessary operation are distinguished from each other for each part.
According to a second aspect of the present disclosure, there is provided a method comprising: identifying, based on error information about a plurality of errors that have occurred in an image processing apparatus and error information about an error occurring in the image processing apparatus, part information about one or more parts to be addressed to clear the error occurring in the image processing apparatus; and providing the part information identified by the identifying using a market performance for managing the number of operations previously performed to clear an error in association with an operation target part and the error, wherein the part information about the one or more parts is provided in order of priority based on the market performance, and the part information is provided in such a form that an operation with a possibility of clearing the error and performing an unnecessary operation are distinguished from each other for each part.
Optional features will now be set out. These are applicable singly or in any combination with any aspect of the disclosure.
The "market performance" may define a characteristic (or value) indicative of the performance of an operation which has previously been performed to clear at least one of the plurality of errors. Accordingly, the market performance may comprise information indicative of the performance of the associated operation.
The part information about the one or more parts may be provided in order of priority corresponding to a percentage based on the market performance.
The provision means may be configured to provide the part information as a response to a request to acquire a repair procedure for an error designated by a web browser.
The system according to the first aspect may comprise a means for performing a filter process (e.g., a filter process means). The filter process means may be configured to perform a filter process on the market performance based on a correct answer master managing an error. The filter process means may be configured to perform a filter process based on a part number of a part having a possibility of causing the error.
In providing the part information, the provision means may provide the part information so that a part being used beyond its lifetime is distinguished from another and identified. The part information about the one or more parts may be provided in order of priority corresponding to a percentage based on the market performance.
The part information may be provided as a response to a request to acquire a repair procedure for an error designated by a web browser.
The method according to the second aspect may comprises performing a filter process on the market performance based on a correct answer master managing an error. The filter process may be based on a part number of a part having a possibility of causing the error. In providing the part information, the part information may be provided so that a part being used beyond its lifetime is distinguished from another part (e.g., which is not being used beyond its lifetime) and identified.

Further features of the present disclosure will become apparent from the following description of exemplary embodiments with reference to the attached drawings.

### BRIEF DESCRIPTION OF THE DRAWINGS

Fig. 1 is a diagram illustrating an example of a configuration of a network system.
Figs. 2A and 2B are diagrams illustrating an example of hardware configurations of apparatuses according to a first embodiment.
Fig. 3 is a diagram illustrating an example of configurations of software modules provided in apparatuses according to the first embodiment.
Fig. 4 is a flowchart illustrating an estimation process according to the first embodiment.
Fig. 5 illustrates an example of a repair procedure display screen.
Fig. 6 is a diagram illustrating an example of a software module configuration of a repair portion notification server according to a second embodiment.
Fig. 7 is a flowchart illustrating a filter process by the repair portion notification server according to the second embodiment.
Fig. 8 is a diagram illustrating an example of a software module configuration of a repair portion notification server according to a third embodiment.
Fig. 9 is a flowchart illustrating a repair part prioritization process according to the third embodiment.
Fig. 10 illustrates an example of an alert information display screen according to the third embodiment.
Fig. 11 illustrates an example of a repair procedure display screen according to the third embodiment.
Fig. 12 is a flowchart illustrating a repair part prioritization process according to a fourth embodiment.
Fig. 13 is a flowchart illustrating a repair part prioritization process according to a fifth embodiment.

### DESCRIPTION OF THE EMBODIMENTS

A first embodiment will be described. Forms for implementing the present disclosure will be described with reference to the drawings.

### <System Configuration>

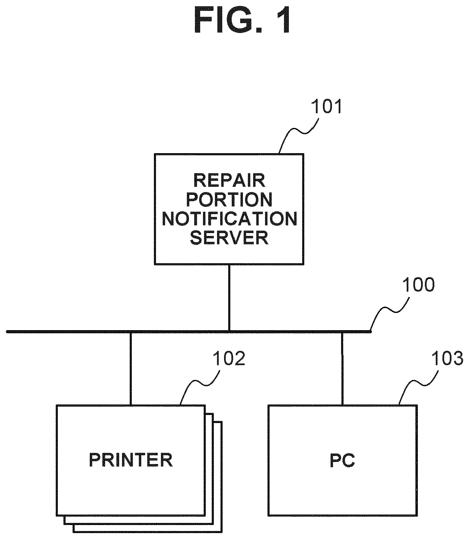

Fig. 1 is a block diagram illustrating an example of a configuration of a network system including a repair portion notification server 101 and an image processing apparatus, such as a printer.

In the network system, the repair portion notification server 101, a printer 102, and a personal computer (PC) 103 can communicate with each other via a network 100.

The network 100 can be, for example, a so-called communication network that is implemented using the Internet, a local area network (LAN), a wide area network (WAN), or a telephone line and is capable of transmitting and receiving data.

The repair portion notification server 101 receives, from the printer 102, error information indicating a malfunction or an error occurring in the printer 102. Then, the repair portion notification server 101 estimates one or more pieces of part information for clearing the error. Furthermore, the repair portion notification server 101 manages (e.g., determines or identifies) a market performance of an operation performed in the market in response to a similar previous error. The server may manage a market performance for a plurality of different operations (e.g., one or more market performances). The market performance may define a characteristic (or value) comprising information indicative of the performance of the associated operation. The repair notification server 101 also manages information for determining a priority of each part to be addressed based on the market performances using a storage service.

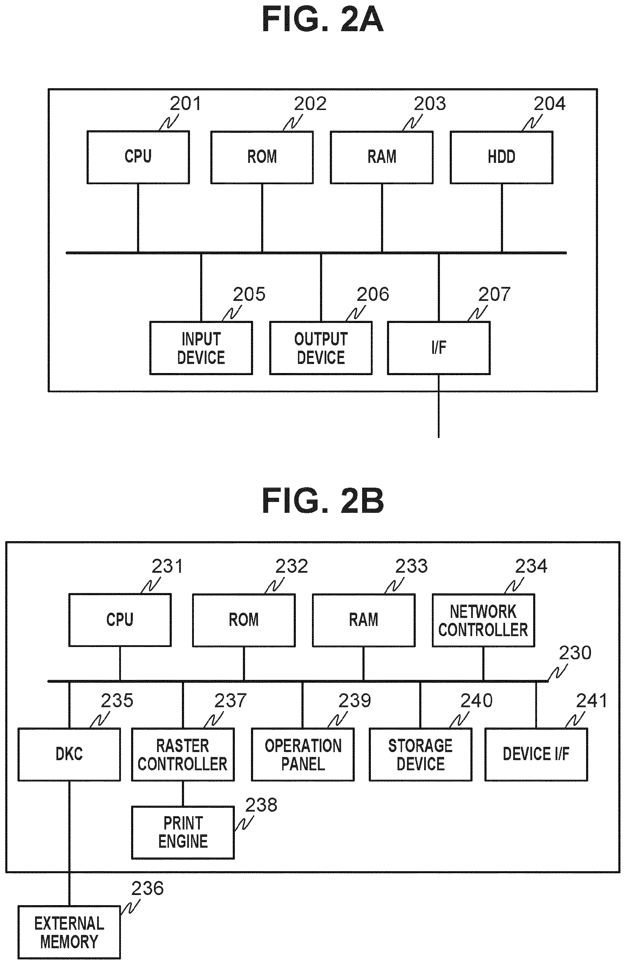

Each function of the repair portion notification server 101 described below can be carried out by a single server or a single virtual server or can be carried out as a system including a plurality of servers or a plurality of virtual servers. Alternatively, a system including a plurality of virtual servers can be a single server. In this case, the repair portion notification server 101 is included as a server function in a system constructed on the Internet. A management system including the repair portion notification server 101 can be designed on a cloud platform based on a cloud computing technology. In this case, at least part of hardware of a computer illustrated in Fig. 2A or 2B described below is used as a hardware resource provided to a virtual server based on the cloud computing technology.

The printer 102 is an example of image processing apparatuses, and the repair portion notification server 101 can similarly manage image processing apparatuses, such as multi-function peripherals and scanners. An image forming apparatus has a hardware configuration for providing functions, such as print, fax, copy, and scanner functions. Further, the printer 102 also includes sensors for detecting occurrences of errors and malfunctions in the printer 102. Information detected by a sensor is transmitted as error information including device information from the printer 102 to the repair portion notification server 101.

The repair portion notification server 101 can similarly manage image processing apparatuses, such as multi-function peripherals and scanners. Further, the repair portion notification server 101 can manage a plurality of image processing apparatuses (not illustrated) similarly to the printer 102.

The PC 103 is an example of information processing apparatuses, and a predetermined operating system (e.g., predetermined OS) (not illustrated) is installed in the PC 103. Further, a browser 331 (e.g., web browser) described below is installed in the PC 103. The browser 331 transmits requests of the printer 102 to the repair portion notification server 101, receives part information from the repair portion notification server 101, and displays content of the received part information as a graphical user interface (GUI).

### <Hardware Configuration>

Fig. 2A is a block diagram illustrating a hardware configuration of information processing apparatuses that form the repair portion notification server 101 and the PC 103 in Fig. 1.

In Fig. 2A, a central processing unit (CPU) 201 directly or indirectly controls devices (e.g., read-only memory (ROM), random access memory (RAM), and other devices described below) connected via an internal bus and runs programs for implementing the present invention. A ROM 202 stores a Basic Input/Output System (BIOS). A RAM 203 (direct storage device) is used as a work area of the CPU 201 and as a temporary storage for loading software modules for implementing the present invention. A hard disk drive (HDD) 204 is an HDD storing basic software, such as the OS, and software modules or an indirect storage device, such as a solid state drive (SSD). An input device 205 is a keyboard (not illustrated) and a pointing device (not illustrated). A display is connected to an output device 206. An interface (I/F) 207 is an I/F for connecting to the network 100.

After activation, the CPU 201 executes the BIOS, and the OS is loaded from the HDD 204 to the RAM 203 to make the OS executable. The CPU 201 loads various software modules described below from the HDD 204 to the RAM 203 as appropriate based on operations of the OS to make the loaded software modules executable. The various software modules are executed by the CPU 201 through the collaboration of the above-described devices and perform operations. Further, the I/F 207 is connected to the Internet or a local network, is controlled by the CPU 201 based on operations of the OS, allowing communication via a communication unit described above.

Fig. 2B is a diagram illustrating a hardware configuration of an image processing apparatus, such as the printer 102. The part of the hardware configuration excluding a print engine 238 is sometimes referred to as a controller that controls the control system of the printer 102. The hardware components are connected to a system bus 230.

A CPU 231 generally controls its apparatus and comprehensively controls access to various devices connected to the system bus 230. The control is based on control programs stored in a ROM 232 or control programs and resource data (resource information) stored in an external memory 236 connected via a disk controller (DKC 235). A RAM 233 functions as a main memory of the CPU 231 and a work area, and the memory capacity of the RAM 233 can be expanded using an optional RAM connected to an expansion port (not illustrated). A storage device 240 is an external storage unit that functions as a large-capacity memory. An operation panel (e.g., operation unit) 239 displays screens and receives operation instructions from users via the screens. Further, a display unit, such as buttons and a liquid crystal panel, for setting an operation mode of the printer 102, displaying an operation status of the printer 102, and designating content data to be printed is also arranged. A network controller 234 is, for example, a network interface card (NIC), and data is exchanged with external apparatuses via the network controller 234. A raster controller 237 is, for example, a controller that converts print data described in page description language (PDL) into image data. The print engine 238 forms an image on a sheet based on image data input from the raster controller 237 using known printing techniques. Examples of suitable implementation systems include print engines using an electrophotographic method (e.g., laser beam method), an inkjet method, or a sublimation (e.g., thermal transfer) method. A device I/F 241 is a connection I/F for connecting external devices that are connectable via a universal serial bus (USB). The printer 102 includes a plurality of sensors (not illustrated) that detects errors and malfunctions.

### <Software Configuration>

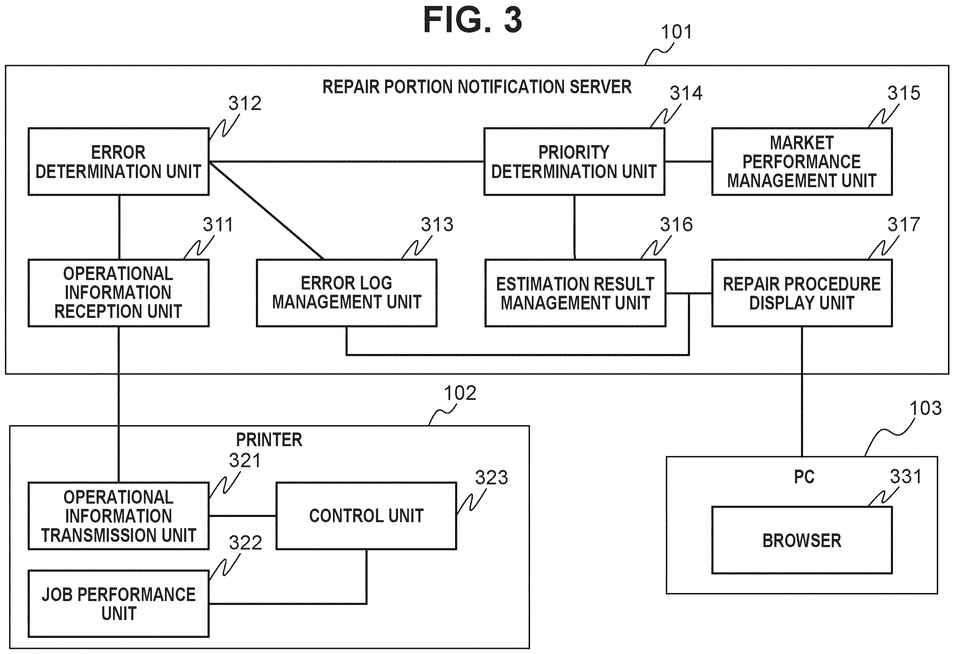

An example of software module configurations included in the network system will be described below with reference to Fig. 3. Each module configuration in Fig. 3 is implemented by the CPU 201 or 231 through execution of programs stored in a memory of the repair portion notification server 101, the printer 102, or the PC 103. Processing steps included in flowcharts described below are performed based on the programs. Schemas and data in tables presented below are mere examples and are not intended to limit table schemas and various data formats.

The repair portion notification server 101 includes an operational information reception unit 311, an error determination unit 312, an error log management unit 313, a priority determination unit 314, a market performance management unit 315, an estimation result management unit 316, and a repair procedure display unit 317.

The operational information reception unit 311 receives operational information from the printer 102. The operational information that the operational information reception unit 311 receives contains error information indicating a malfunction or an error, counter information, and log information. The operational information not only contains content, such as an error code, but also device information indicating identification information about the printer 102 that is a transmission source of the information.

The error determination unit 312 receives error information from the operational information reception unit 311. The error determination unit 312 analyzes content of the received error information and acquires, from the error log management unit 313, error logs that are error information about errors that have occurred in the printer 102 in which an error is occurring. Furthermore, the error determination unit 312 identifies part information about one or more parts with a possibility of clearing an error specified by the received error information. Then, the error determination unit 312 transmits, to the priority determination unit 314 described below, the received error information and the identified part information as a determination result.

At this time, if the error determination unit 312 fails to identify part information, information indicating the failure of identification is transmitted as a determination result together with the received error information to the priority determination unit 314. An example of a case where part information cannot be identified is a case where a predetermined error code from which an error cannot be identified is transmitted as error information. Further, the error log management unit 313 accumulates the error information received by the error determination unit 312 as an error log in association with the identification information (e.g., device ID) about the printer 102.

The error log management unit 313 accumulates, stores, and manages the error information received from the printer 102 as an error log. Table A shows an example of some of the error logs managed by the error log management unit 313.

**[Table 1]**

| Table A | | | | | |
|---|---|---|---|---|---|
| Error ID | Device ID | Model No. | Error Code | Counter Value | Occurrence Date/Time |
| Err-001 | DEV0000001 | Model-001 | E001-0001 | 5000 | 2022-10-01T12:34:56Z |
| Err-002 | DEV0000002 | Model-002 | E002-0002 | 1500 | 2022-09-03T00:00:00Z |
| Err-003 | DEV0000001 | Model-001 | E003-0001 | 2000 | 2022-09-01T00:12:34Z |

In the error logs, a single record is prepared for a single piece of error information. In each record, an error identifier (e.g., error ID) that uniquely identifies an error, identification information (e.g., device ID) that uniquely identifies the printer in which the error occurs, a model number representing a model, and an error code representing a type of the occurred error are recorded. Further, in each record, a counter value representing a total number of sheets printed by the image processing apparatus by the time of occurrence of the error is managed. The counter information is also contained in the error information. Furthermore, in each record, an error occurrence date/time contained in the error information is also managed.

When receiving a determination result from the error determination unit 312, the priority determination unit 314 acquires, from the market performance management unit 315, market performances with a model number and an error code that match the model number and the error code contained in the error information. The priority determination unit 314 prioritizes part information as "part information with a high possibility of clearing the error" in decreasing order of the number of replacements in the market performances with a part number that matches the part information contained in the determination result. Thereafter, the estimation result management unit 316 stores a repair procedure indicating the prioritized part information as an estimation result.

The market performance management unit 315 manages, for error codes of errors that occurred in image processing apparatuses sold and used previously, all the replacement operations performed by service engineers to clear the errors. Table B shows an example of some of the market performances managed by the market performance management unit 315. The number of part replacements for each model number, each error code, and each part number is calculated, and the foregoing pieces of information are accumulated and managed in association with each other.

**[Table 2]**

| Table B | | | |
|---|---|---|---|
| Model No. | Error Code | Part Number | Number of Replacements |
| Model-001 | E001-0001 | Part1-111 | 510 |
| Model-001 | E001-0001 | Part2-222 | 228 |
| Model-001 | E001-0001 | Part3-333 | 92 |
| Model-001 | E001-0001 | Part4-444 | 20 |
| Model-001 | E001-0001 | Part5-555 | 150 |
| Model-002 | E001-0001 | Part1-111 | 123 |
| Model-001 | E001-0002 | Part5-555 | 2000 |

Each market performance includes a model number indicating a model, an error code indicating a type of an occurred error, the part number of a part replaced in response to the error, and the number of replacements that is the number of part replacements performed. The market performance management unit 315 similarly manages the number of all the operations other than the replacements performed by a service engineer to clear the errors in response to error codes of errors that occurred in image processing apparatuses sold and used previously. To identify operations that are unnecessary for clearing an error, operation information indicating a market performance with the number of market operations being zero can be used.

The estimation result management unit 316 stores and manages, as an estimation result, a repair procedure estimated based on the part information identification and the market performance by the priority determination unit 314. Table C shows an example of some of estimation results managed by the estimation result management unit 316.

**[Table 3]**

| Table C | | | |
|---|---|---|---|
| Device ID | Error ID | Part Number | Priority |
| DEV0000001 | Err-001 | Part1-111 | 51.0 |
| DEV0000001 | Err-001 | Part2-222 | 22.8 |
| DEV0000001 | Err-001 | Part3-333 | 9.2 |
| DEV0000001 | Err-001 | Part4-444 | 2.0 |
| DEV0000002 | Err-002 | Part1-111 | 100.0 |

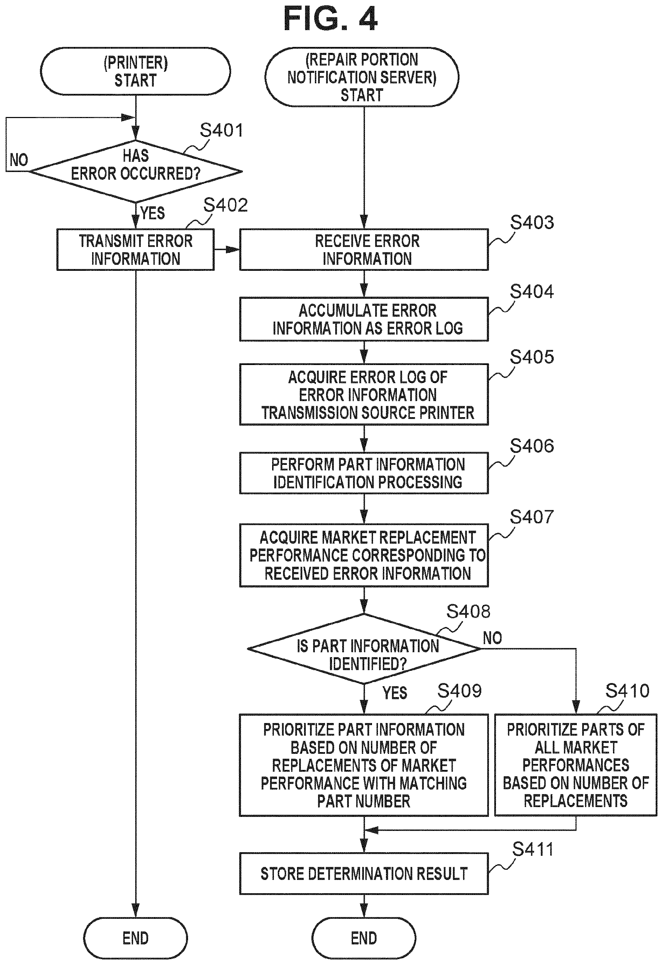

Each estimation result includes a device ID, an error ID, a part number of part information for the error, and a priority indicating the order of a repair target part. According to the present embodiment, the greater the numerical value of the priority is, the higher the repair priority is. An example of a priority calculation method will be described below with reference to Fig. 4 illustrating a part information estimation process.

When receiving a repair procedure acquisition request containing a device ID and an error ID from the browser 331 of the PC 103, the repair procedure display unit 317 acquires, from the error log management unit 313, error logs with a matching device ID and a matching error ID. Further, the repair procedure display unit 317 acquires, from the estimation result management unit 316, an estimation result with a matching device ID and a matching error ID, generates a repair procedure display screen, and returns the repair procedure display screen to the browser 331. The repair procedure display screen is provided as data described in Hyper Text Markup Language (HTML).

The printer 102 includes an operational information transmission unit 321, a job performance unit 322, and a control unit 323.

The operational information transmission unit 321 transmits operational information, such as error information about errors occurring in the printer 102 that is collected by the control unit 323 described below, to the repair portion notification server 101 using the network controller 234.

The job performance unit 322 performs jobs input to the printer 102. For example, when a print job is input, the job performance unit 322 performs printing processing based on the print job.

The control unit 323 collects error information about errors detected in the printer 102 and controls transmission of the error information to the repair portion notification server 101 through the operational information transmission unit 321.

### <Part Information Estimation Process>

Fig. 4 is a flowchart illustrating a part information estimation process.

In step S401, the control unit 323 of the printer 102 determines whether an error has occurred in the printer 102. If an error has occurred (YES in step S401), in step S402, the operational information transmission unit 321 of the printer 102 transmits error information as operational information to the repair portion notification server 101.

In step S403, the operational information reception unit 311 of the repair portion notification server 101 receives the error information from the printer 102. The transmitted error information contains an error ID corresponding to the occurred error, a device ID, a model number, an error code, a counter value, and an error occurrence date/time.

While the counter value is contained in the error information in the examples according to the present embodiment, another method can be used in which, for example, a counter value as counter information is received as operational information different from the error information from the printer 102 and is then associated with the error information in the repair portion notification server 101. In step S404, the error log management unit 313 accumulates the received error information as an error log.

In step S405, the error determination unit 312 acquires, from the previously accumulated error logs, error logs with a device ID that matches the device ID contained in the error information received in step S403. For example, if the device ID contained in the error information is "DEV0000001", the records in the first and third columns of Table A are acquired.

In step S406, the error determination unit 312 identifies, using the error information received from the printer 102 and the error logs acquired from the error log management unit 313, a combination of (e.g., a part number of) a target part with a high possibility of clearing the error and operations on the target part based on a rule-based method. The rule-based determination identifies one or more combinations in some cases.

At this time, a list of one or more identified combinations is generated, and the generated list is used as a part information determination result.

Further, in step S406, in some cases, the error determination unit 312 fails to identify part information that is with a high possibility of clearing the error and is to be addressed. An example is a case of errors not managed based on a rule-based method. In this case, the error determination unit 312 takes an empty part number list indicating the unsuccessful identification of part information as a part information determination result.

While the error determination unit 312 uses the rule-based method based on the received error information and the error logs of previously occurred errors in the device according to the present embodiment, the part information identification is not limited to those described above. For example, the part information identification can be performed by performing an estimation process using a trained model generated by supervised machine learning including deep learning.

In step S407, the priority determination unit 314 acquires, from the market performance management unit 315, market replacement performances with a model number and an error code that match the model number and the error code contained in the error information received in step S403. For example, if the model number and the error code contained in the error information are respectively "Model-001" and "E001-0001", the records in the first to fifth columns of Table B are acquired.

In step S408, the priority determination unit 314 checks whether part information is identified by the error determination unit 312 in step S406. If the determination result indicates that no part information is successfully identified (NO in step S408), the processing proceeds to step S410, whereas if the determination result indicates that part information is identified (YES in step S408), the processing proceeds to step S409.

In step S409, the priority determination unit 314 acquires, for each part number contained in the part information, the number of replacements that corresponds to the part number from the market performances acquired in step S407. Next, the priority determination unit 314 associates a priority "(number of replacements of part information/total number of replacements of all parts replaced for errors) × 100" as an estimation result with the part number.

Specifically, priorities of all replaced parts in response to error codes of occurred errors in a model are calculated as a percentage by part so that the total of the priorities is 100%.

While a priority is calculated based on the number of replacements of part information in a total number of replacements of the entire part information to be addressed according to the present embodiment, priority calculation methods are not limited to the method according to the present embodiment, and any method can be used. For example, if the part number list shows [Part1-111, Part2-222, Part3-333, Part4-444] and the market performances acquired in step S407 correspond to the first to fifth columns of Table B, the total number of replacements of all replaced parts is the sum of the numbers of replacements of the market performances, which is 1,000.

At this time, a priority of the part number "Part1-111" is "(510/1,000) × 100 = 51.0". Similarly, priorities of the other part numbers "Part2-222", "Part3-333", and "Part4-444" are "22.8", "9.2", and "2.0".

In step S410, the priority determination unit 314 calculates a priority for every record of the market performances acquired in step S407 using the same method as in step S409. For example, if the market performances acquired in step S407 correspond to the first to fifth columns of Table B, priorities are calculated for the five part numbers "Part1-111", "Part2-222", "Part3-333", "Part4-444", and "Part5-555" contained in the market performances, and the calculated priorities as an estimation result are associated with the part numbers.

In step S411, the estimation result management unit 316 stores the part numbers and the priorities estimated in step S409 or S410 as estimation results together with the device ID and the error ID contained in the error information received on this occasion.

For example, the records in the first to fourth columns of Table C are examples of estimation results based on the part numbers and the priorities calculated in step S409.

### <GUI of Part Information Display Screen>

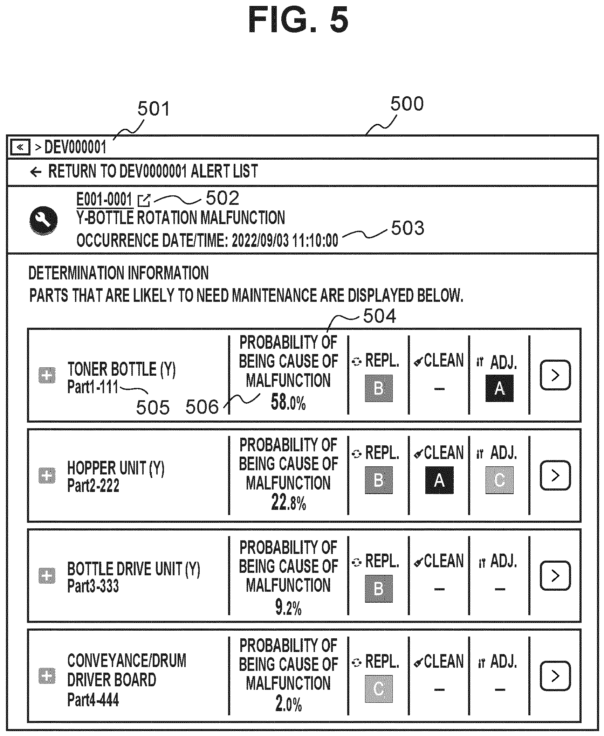

Fig. 5 illustrates an example of a repair procedure display screen displayed on the browser 331 based on data provided by the repair portion notification server 101. The repair procedure display unit 317 of the repair portion notification server 101 that has received a repair procedure acquisition request containing a device ID and an error ID from the browser 331 of the PC 103 responds with data on the repair procedure display screen, providing information.

The management system according to the present disclosure is an information provision system that provides a repair procedure for clearing errors by presenting an error in a form, such as a repair procedure display screen 500. The repair procedure display screen 500 contains repair procedures for errors designated from the browser 331.

The repair procedure display screen 500 displays error logs and estimation results managed by the repair portion notification server 101.

A device ID 501 displays a device ID of an error log with the error ID that matches the error ID designated in the acquisition request, among the error logs managed by the error log management unit 313.

An error code 502 displays an error code of the error log with the error ID that matches the error ID designated in the acquisition request, among the error logs managed by the error log management unit 313.

An occurrence date/time 503 displays the occurrence date/time of the error log with the error ID that matches the error ID designated in the acquisition request, among the error logs managed by the error log management unit 313.

Part information 504 displays estimation results with the error ID that matches the error ID in the acquisition request, among the estimation results managed by the estimation result management unit 316. The repair procedure display unit 317 displays a list of the part information 504 contained in the target estimation results in decreasing order of priority 506 of the estimation results from the top. Furthermore, operations (e.g., replacement, cleaning, adjustment) with a possibility of clearing the error are also displayed for each piece of part information. In this case, the symbol "-" is displayed with respect to unnecessary operations to reduce wasteful operations.

While the estimation results are simply displayed in order of priority according to the present embodiment, with, for example, a plurality of estimation results, an icon or a message indicating "a part to be addressed" can be added and displayed with respect to the estimation results with a priority higher than a threshold on the repair procedure display screen 500.

Part number 505 shows a part number of an estimation result managed by the estimation result management unit 316.

Thus, the part information for clearing the error occurring in the printer 102 can be prioritized and displayed in decreasing order of possibility of clearing the error.

While the identification (step S406) of part information to be addressed and the priority calculation (step S409 or S410) are performed at the time of receiving error information from the printer 102 according to the present embodiment, this is not a limitation. For example, a method can be used in which only the part information identification is performed at the time of receiving error information, and then the priority calculation is performed at the time of receiving a repair procedure acquisition request from the browser 331.

Further, while a display order is determined by part using the number of part replacements in the above-described method according to the present embodiment, the market performance management unit 315 can also store the number of operations other than part replacement operations, such as cleaning and adjustment, and the estimation results prioritized for each of the operations of replacement, cleaning, and adjustment based on the priorities of the parts and the operations can be displayed.

A second embodiment will be described below. According to the first embodiment, if the error determination unit 312 fails to identify part information in step S408, a priority is calculated for every record of the market performances with a matching model number and a matching error code in step S410 using the same method as in step S409.

Since the part(s) replaced to clear an error and the number of replacements are recorded in the market performances regardless of whether the part(s) is a cause of the error, information about an earlier incorrect part replacement unrelated to an error may also have been recorded. With the amount of such information being greater than anticipated, the part information 504 may display an incorrect part as an estimation result.

A case where the market performances of the market performance management unit 315 are indicated in Table B will be described. Even if the fifth column of Table B shows a part that cannot be a cause of the error code "E001-0001" of the model number "Model-001", the part information 504 displays the part number "Part5-555".

An example will be described of displaying a correct estimation result in the part information 504 even though the market performances contain a part replacement unrelated to an error according to the present embodiment. Redundant descriptions of those that are similar to the first embodiment are omitted.

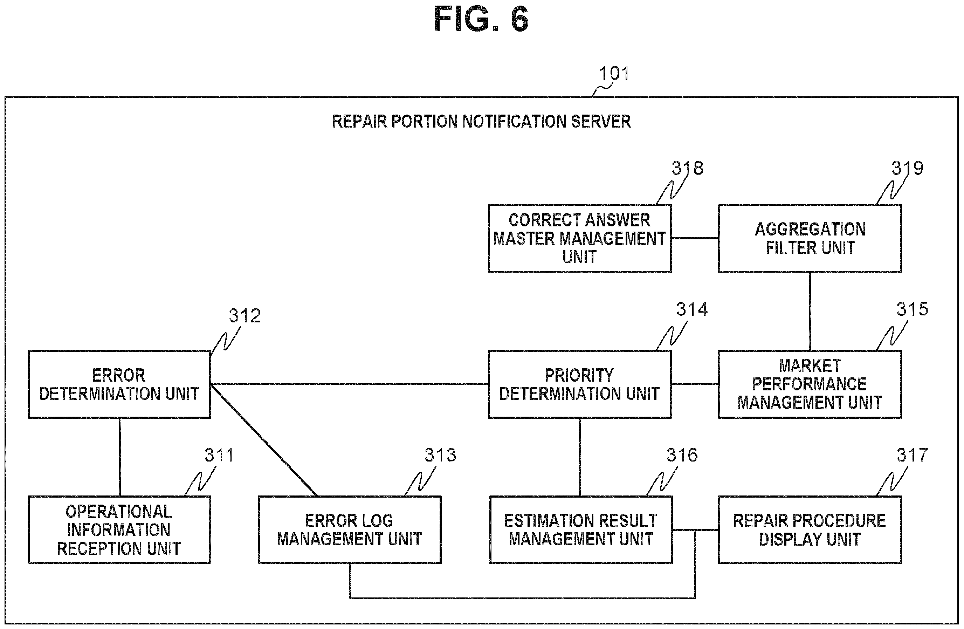

An example of a configuration of software modules of the repair portion notification server 101 according to the present embodiment that are added to the first embodiment will be described with reference to Fig. 6.

A correct answer master management unit 318 stores and manages, as correct answer masters with respect to an error code of an error that occurs in the printer 102, a model number, the error code, and (e.g., one or more) part numbers of parts that are a possible cause of the error corresponding to the error code. This is a master table managing combinations that are categorically identified based on apparatus specifications.

Table D shows an example of some of the correct answer masters managed by the correct answer master management unit 318.

**[Table 4]**

| Table D | | |
|---|---|---|
| Model No. | Error Code | Part Number |
| Model-001 | E001-0001 | Part1-111 |
| Model-001 | E001-0001 | Part2-222 |
| Model-001 | E001-0001 | Part3-333 |
| Model-001 | E001-0001 | Part4-444 |
| Model-001 | E001-0002 | Part5-555 |
| Model-002 | E001-0001 | Part1-111 |

Each correct answer master includes a model number representing a model, an error code indicating a type of an occurred error, and a part number of part information about a part that can be a cause of an error corresponding to the error code.

An aggregation filter unit 319 filters out market performances indicating a part replacement unrelated to an error, i.e., a replacement of a part that is not a cause of an error, by comparing the correct answer masters managed by the correct answer master management unit 318 and the market performances stored in the market performance management unit 315.

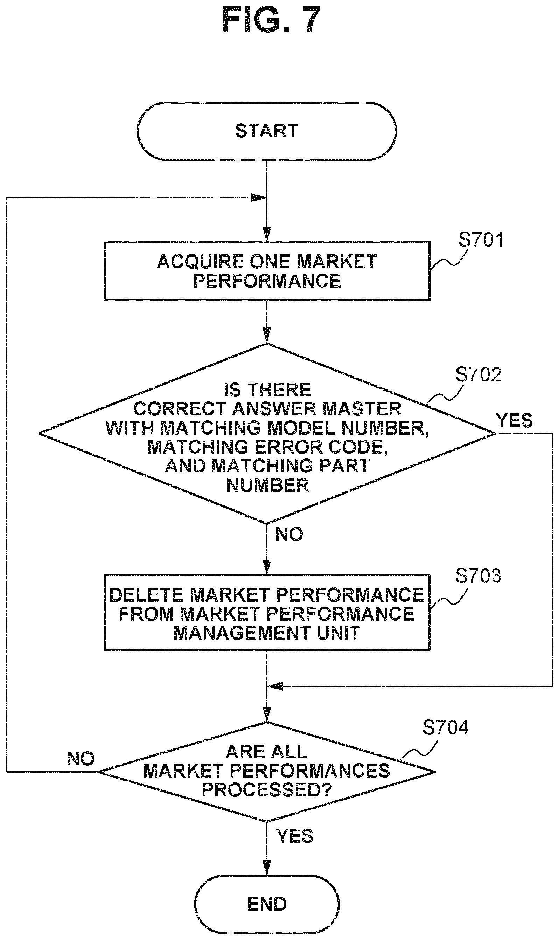

Fig. 7 is a flowchart illustrating the filter process that the aggregation filter unit 319 of the repair portion notification server 101 performs.

In step S701, the aggregation filter unit 319 acquires a record of a single market performance from the market performance management unit 315. In step S702, the aggregation filter unit 319 determines whether there is a record with a model number, an error code, and a part number that match the model number, the error code, and the part number of the market performance acquired in step S701 in the correct answer masters managed by the correct answer master management unit 318. If the aggregation filter unit 319 determines that there is such a record (YES in step S702), the processing proceeds to step S704, whereas if the aggregation filter unit 319 does not determine that there is such a record (NO in step S702), the processing proceeds to step S703.

In step S703, the aggregation filter unit 319 deletes the market performance acquired in step S701 from the market performance management unit 315. Consequently, the market performance indicating a part replacement unrelated to an error, i.e., a replacement of a part that is not a cause of an error, is deleted.

In step S704, if the aggregation filter unit 319 has processed all the market performances managed by the market performance management unit 315 (YES in step S704), the process is ended, whereas if there is still an unprocessed market performance (NO in step S704), in step S701, the process of acquiring the next market performance is performed.

Thus, the market performance indicating a replacement of a part that is not a cause of an error can be filtered out from among the market performances stored in the market performance management unit 315.

For example, if the market performances are indicated in Table B and the correct answer masters are indicated in Table D, the market performance in the fifth column of Table B with the model number "Model-001", the error code "E001-0001", and the part number "Part5-555" is deleted because there is no corresponding correct answer master in Table D. Since the market performance of the part unrelated to an error is deleted in steps S702 and S703, incorrect parts are less likely to be displayed as an estimation result in the part information 504.

Timings of performing the market performance filter process according to the present embodiment are not particularly limited. For example, the process can be performed regularly or each time a new market performance is registered in the market performance management unit 315.

A third embodiment will be described. According to the first embodiment, a priority is calculated based on the number of replacements of the market performance of the part corresponding to the identified part information in steps S409 and S410. Meanwhile, if the identified part has exceeded its expected lifetime to some extent in an error, a malfunction may occur due to a consumed level of the part. The lifetime herein may be a nominal value (e.g., nominal lifetime) that is determined as having a possibility of a malfunction due to consumption when the part is used under predefined conditions. In providing an estimation result of a repair portion, identification of how much each part has been used with respect to its lifetime can also be important.

A priority calculation method that considers specific situations of a target device, such as consumed levels of parts, according to the present embodiment will be described. Redundant descriptions of those that are similar to the first embodiment are omitted.

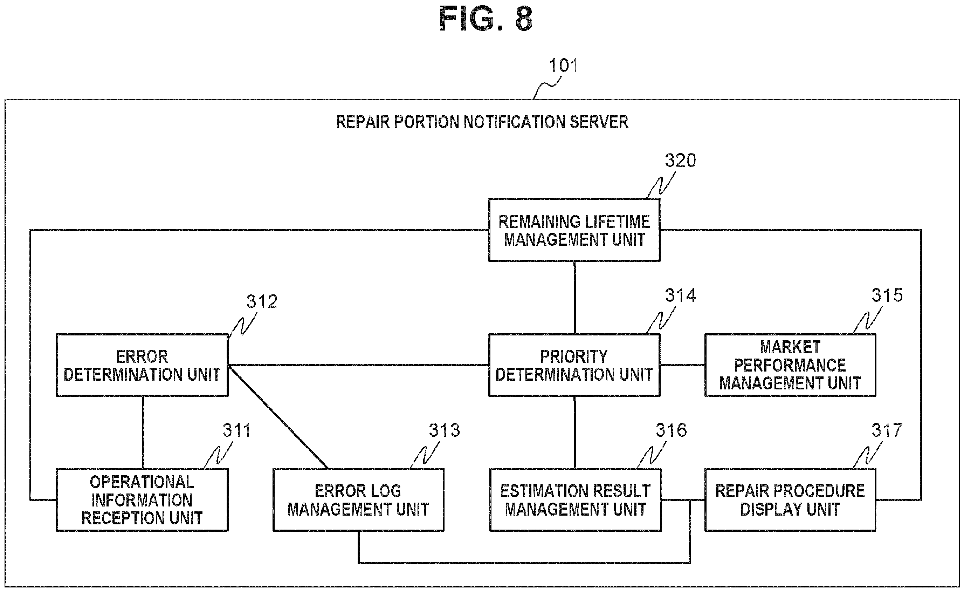

An example of a configuration of software modules of the repair portion notification server 101 according to the present embodiment that are added to the first embodiment will be described below with reference to Fig. 8.

A remaining lifetime management unit 320 stores and manages the number of remaining days of lifetime of each part of the printer 102 as remaining lifetime information together with the device ID and the part number. Table E shows an example of some of the remaining lifetime information managed by the remaining lifetime management unit 320.

**[Table 5]**

| Table E | | |
|---|---|---|
| Device ID | Part Number | Remaining Days of Lifetime |
| DEV0000001 | Part1-111 | 200 |
| DEV0000001 | Part2-222 | 123 |
| DEV0000001 | Part3-333 | -10 |
| DEV0000001 | Part4-444 | 45 |
| DEV0000002 | Part1-111 | 10 |

Each piece of remaining lifetime information includes a device ID, a part number, and the number of remaining days of lifetime as a predicted number of days before the end of the lifetime of the part.

The remaining lifetime management unit 320 regularly receives counter values of parts and lifetime values, which are percentages of usage with respect to the nominal lifetime of each part, from the printer 102 via the operational information reception unit 311, calculates and predicts the number of remaining days of lifetime based on increases in the counter values and the lifetime values, and generates remaining lifetime information.

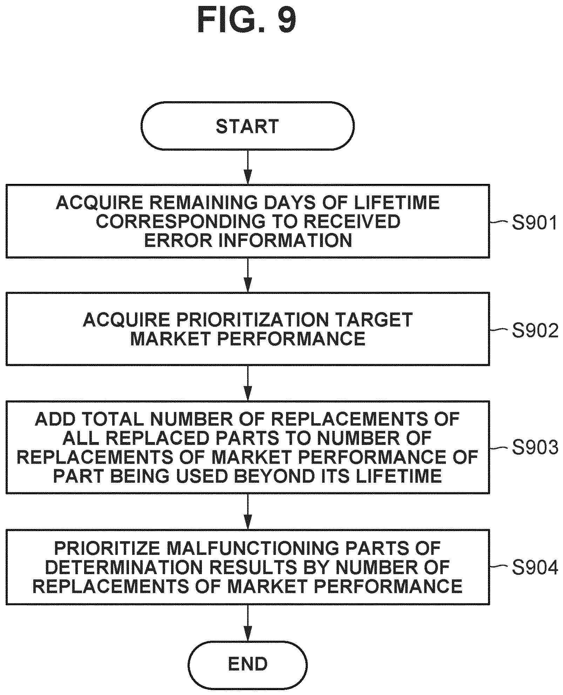

Fig. 9 is a flowchart illustrating a prioritization process in an estimation process according to the present embodiment. Specifically, the flowchart illustrates the prioritization process in steps S409 and S410 according to the first embodiment.

In step S901, the priority determination unit 314 acquires, from the remaining lifetime management unit 320, remaining lifetime information with the device ID that matches the device ID contained in the error information received in step S403. For example, if the device ID contained in the error information is "DEV0000001", the four records in the first to fourth columns of Table E are acquired.

In step S902, the priority determination unit 314 acquires prioritization target market performances from the market performances acquired in step S407. If the determination result by the error determination unit 312 in step S408 indicates that part information is identified, only the market performances with the part number that matches the part number of the part information are to be prioritized, whereas if the part information identification is unsuccessful, all the market performances are to be prioritized.

In step S903, the priority determination unit 314 adds the total number of replacements of all replaced parts to the number of replacements of the market performances of the parts being used beyond their lifetimes among the market performances acquired in step S902.

According to the present embodiment, whether a part is being used beyond its lifetime is determined based on whether the number of remaining days of lifetime is less than zero. For example, if the part number is "Part1-111", the number of remaining days of lifetime is "200", and it is determined that the part is being used within its lifetime. Further, if the part number is "Part3-333", the number of remaining days of lifetime is "-10", and it is determined that the part is being used beyond its lifetime. For example, if all prioritization target market performances correspond to the first to fifth columns of Table B, the total number of replacements of all replaced parts is the sum of the numbers of replacements of the market performances, which is 1,000. In this case, the number of replacements of the part number "Part3-333" of the part being used beyond its lifetime is set to 1,092.

Step S904 is similar to step S410, so that redundant descriptions thereof are omitted.

While whether a part is being used beyond its lifetime is determined based on the number of remaining days of lifetime calculated from the counter values in step S903 according to the present embodiment, the remaining lifetime of a part can be calculated and determined based on sensor information, such as a voltage value of the part.

Further, while the total number of replacements of all replaced parts is added in step S903 if a part is being used beyond its lifetime according to the present embodiment, the number of replacements can be increased until, for example, the priority becomes the highest.

The estimation result management unit 316 according to the present embodiment stores and manages, as estimation results, the device IDs, the error IDs, the part numbers, and the numbers of remaining days of lifetime acquired in step S901. Table F shows an example of some of the estimation results managed by the estimation result management unit 316 according to the present embodiment.

**[Table 6]**

| Table F | | | | |
|---|---|---|---|---|
| Device ID | Error ID | Part Number | Priority | Remaining Days of Lifetime |
| DEV0000001 | Err-001 | Part1-111 | 25.5 | 200 |
| DEV0000001 | Err-001 | Part2-222 | 11.4 | 123 |
| DEV0000001 | Err-001 | Part3-333 | 54.6 | -10 |
| DEV0000001 | Err-001 | Part4-444 | 1.0 | 45 |

### <GUI of Alert Information Display Screen>

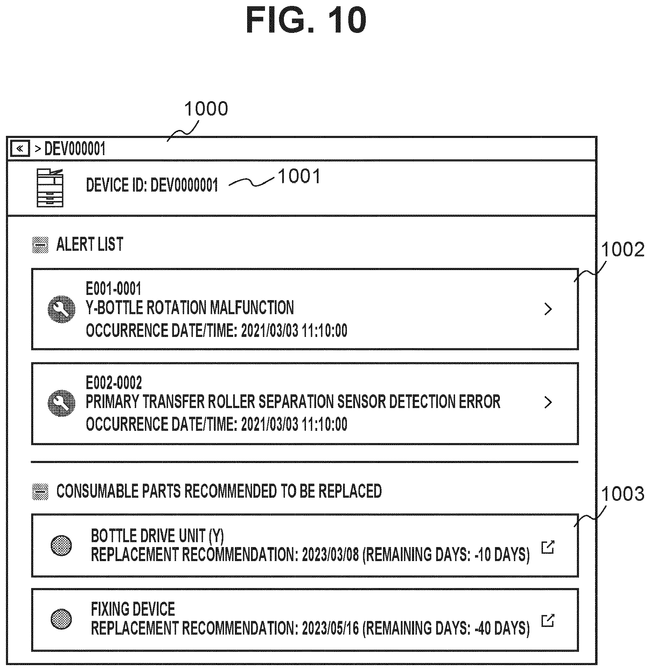

Fig. 10 illustrates an example of an alert information display screen displayed on the browser 331 based on data provided by the repair portion notification server 101 according to the present embodiment. The repair procedure display unit 317 of the repair portion notification server 101 that has received an alert information acquisition request containing a device ID from the browser 331 of the PC 103 responds with data on the alert information display screen, providing information.

An alert information display screen 1000 displays error logs and remaining lifetime information managed by the repair portion notification server 101.

A device ID 1001 displays the device ID of an error log that matches the device ID designated in the acquisition request among the error logs managed by the error log management unit 313.

An error log 1002 displays error logs with the device ID that matches the device ID designated in the acquisition request among the error logs managed by the error log management unit 313. When the error log 1002 is selected, the screen transitions to a repair procedure display screen 1100 described below.

A consumed part 1003 displays part information with the device ID that matches the device ID designated in the acquisition request and with the number of remaining days of lifetime that is less than or equal to a specific threshold, among the remaining lifetime information managed by the remaining lifetime management unit 320. According to the present embodiment, icon displays indicating emergency levels are switched based on whether the number of remaining days of lifetime is less than zero. For example, if the number of remaining days of lifetime is less than zero, a red-signal icon is displayed, whereas if the number of remaining days of lifetime is less than or equal to the specific threshold, a yellow-signal icon is displayed.

### <GUI of Repair Procedure Display Screen>

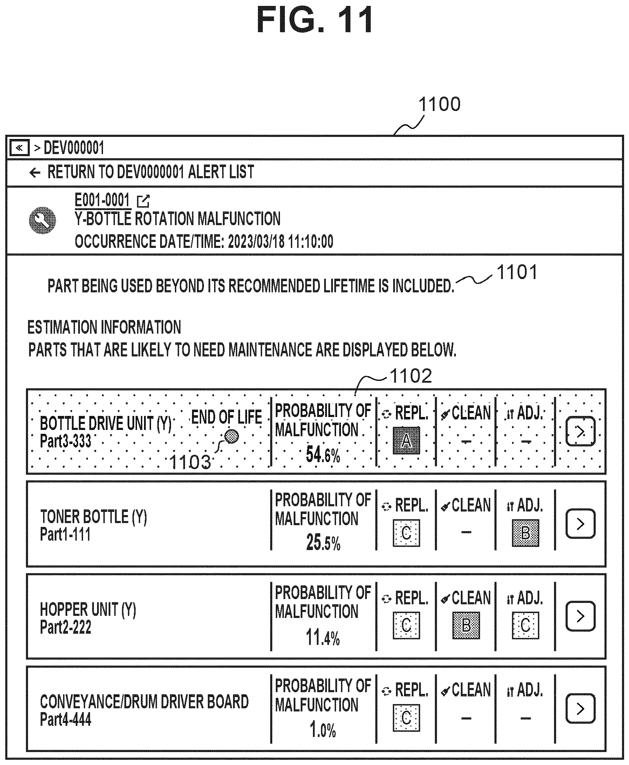

Fig. 11 illustrates an example of a repair procedure display screen displayed on the browser 331 based on data provide by the repair portion notification server 101 according to the present embodiment. The repair procedure display unit 317 of the repair portion notification server 101 that has received a repair procedure acquisition request containing a device ID and an error ID from the browser 331 of the PC 103 responds with data on the repair procedure display screen, providing information.

The repair procedure display screen 1100 in Fig. 11 displays error logs and estimation results managed by the repair portion notification server 101.

Unlike the foregoing screen in Fig. 5, a message 1101 is especially displayed in Fig. 11. The message 1101 is a message that is displayed if the estimation results managed by the estimation result management unit 316 include a record of an estimation result with the error ID that matches the error ID contained in the acquisition request and with the number of remaining days of lifetime that is less than zero.

Further, part information 1102 displays estimation results with the error ID that matches the error ID contained in the acquisition result among the estimation results managed by the estimation result management unit 316. The repair procedure display unit 317 displays a list of the part information 504 included in the target estimation results in decreasing order of the priority 506 of the estimation results from the top. Furthermore, if the number of remaining days of lifetime of part information is less than zero, this record is displayed in such a form that the record is distinguished from others and the fact that the number of remaining days of lifetime of the part information is less than zero can be recognized. For example, the display color of the part information is changed, or a highlight display is used for the part information. An end-of-life display 1103 displays a predetermined mark with respect to the part information with the number of remaining days of lifetime that is less than zero among the estimation results managed by the estimation result management unit 316.

Thus, the part information can be prioritized and displayed in decreasing order of possibility of clearing the error in consideration of the usage of the parts specific to the printer 102.

A fourth embodiment will be described. In the above-described method according to the third embodiment, a priority is calculated after the number of replacements of the market performance of a part being used beyond its lifetime is increased in step S903. Some parts are not affected by their lifetimes depending on the error. An example is a case where an error B is not likely to occur even if a part A is being used beyond its lifetime. Simply increasing the number of replacements based on the number of remaining days of lifetime to improve a priority may result in presenting to a user a part that is not a cause of an error with a high priority.

A priority calculation method according to the present embodiment that considers for which error a part used beyond its lifetime was replaced will be described. Redundant descriptions of those that are similar to the third embodiment are omitted.

Table G shows an example of some of the market performances managed by the market performance management unit 315 according to the present embodiment.

**[Table 7]**

| Table G | | | | | | | | |
|---|---|---|---|---|---|---|---|---|
| Model No. | Error Code | Part Number | Number of Replacements | Part1-111 | Part2-222 | Part3-333 | Part4-444 | Part5-555 |
| Model-001 | E001-0001 | Part1-111 | 510 | 150 | 10 | 13 | 0 | 13 |
| Model-001 | E001-0001 | Part2-222 | 228 | 30 | 160 | 2 | 0 | 2 |
| Model-001 | E001-0001 | Part3-333 | 92 | 20 | 0 | 80 | 1 | 0 |
| Model-001 | E001-0001 | Part4-444 | 20 | 5 | 30 | 5 | 10 | 5 |
| Model-001 | E001-0001 | Part5-555 | 150 | 10 | 0 | 0 | 4 | 80 |
| Model-002 | E001-0001 | Part1-111 | 123 | 30 | 0 | 0 | 0 | 1 |
| Model-001 | E002-0002 | Part5-555 | 2000 | 0 | 0 | 54 | 0 | 313 |

Each market performance includes a model number representing a model, an error code indicating a type of an occurred error, the part number of a part replaced in response to the error, the number of replacements that is the number of part replacement performed, and the number of replacements of a part being used beyond its lifetime to clear an error.

For example, the column "Part1-111" of Table G is the number of replacements of the part corresponding to the part number "Part1-111" being used beyond its lifetime.

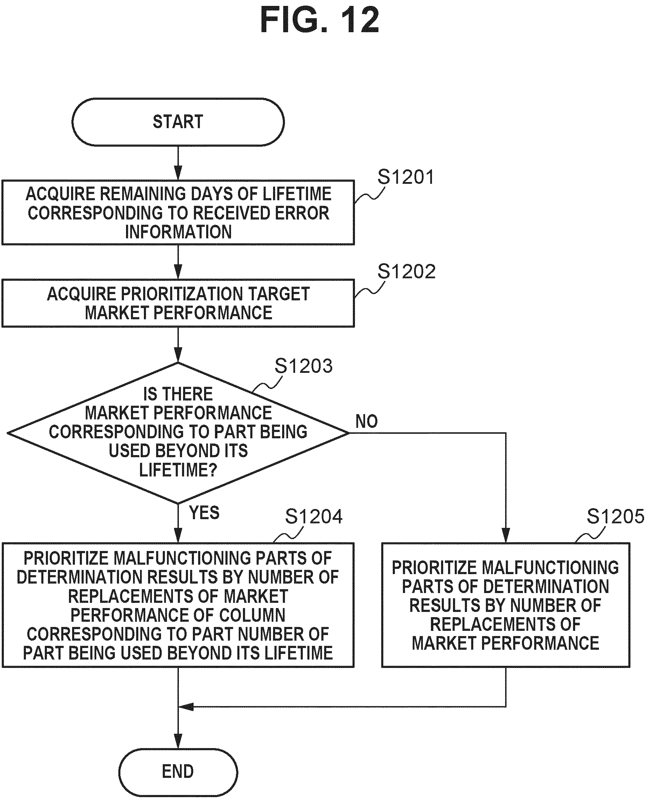

Fig. 12 is a flowchart illustrating a prioritization process in an estimation process according to the present embodiment.

Steps S1201, S1202, and S1205 are similar to steps S901, S902, and S904, respectively, so that redundant descriptions thereof are omitted.

In step S1203, the priority determination unit 314 checks whether there is a market performance with the part number that matches the part number of a part being used beyond its lifetime, i.e., a market performance with the part number that matches a part number associated with the number of remaining days of lifetime that is less than zero, based on the remaining lifetime information acquired in step S901 and the market performances acquired in step S902. If the market performances acquired in step S902 correspond to the first to fifth columns in Table G, the number of remaining days of lifetime of the remaining lifetime information on the part number "Part3-333" in Table E is "-10", and the record of the third column of Table G satisfies the condition. As a result of the foregoing processing, if there is a market performance corresponding to a part being used beyond its lifetime (YES in step S1203), the processing proceeds to step S1204, whereas if there is no such a market performance (NO in step S1203), the processing proceeds to step S1205.

In step S1204, the priority determination unit 314 prioritizes a malfunctioning part of the determination result based on the number of replacements of the market performance of the column corresponding to the part number of the part being used beyond its lifetime. For example, if the remaining lifetime information acquired in step S901 corresponds to the first to fourth columns in Table E and the market performances acquired in step S902 correspond to the first to fifth columns in Table G, the remaining lifetime information with the number of remaining days of lifetime that is less than zero among the five part numbers "Part1-111", "Part2-222", "Part3-333", "Part4-444", and "Part5-555" contained in the market performances is "Part3-333". Thus, the number of replacements of the column "Part3-333" is used in calculating a priority of the malfunctioning part. The numbers of replacements of the five part numbers "Part1-111", "Part2-222", "Part3-333", "Part4-444", and "Part5-555" contained in the market performances are "13", "2", "80", "5", and "0", respectively. In this case, the total number of replacements of all replaced parts is "100", and the priority of the part number "Part1-111" is "(13/100) × 100 = 13.0". Similarly, the priorities of the other part numbers "Part2-222", "Part3-333", and "Part4-444" are "2.0", "80.0", and "5.0".

Thus, a repair part priority order considering for which error a part being used beyond its lifetime was replaced can be presented.

A fifth embodiment will be described. In the above-described method according to the fourth embodiment, the market performance management unit 315 manages the number of replacements at the time of replacing a part being used beyond its lifetime to clear an error and uses the number of replacements in prioritizing malfunctioning parts. In this case, the number of replacements of a part being used beyond its lifetime is to be stored for each part number in the market performances, so that the data size of the market performances increases. This increases the estimation processing time. A priority calculation method according to the present embodiment will be described in which the number of replacements is used together with the number of replacements of a part being used beyond its lifetime in the market performances. Redundant descriptions of those that are similar to the fourth embodiment are omitted.

Table H shows an example of some of the market performances managed by the market performance management unit 315 according to the present embodiment.

**[Table 8]**

| Table H | | | | |
|---|---|---|---|---|
| Model No. | Error Code | Part Number | Number of Replacements | Number of End-of-life Replacements |
| Model-001 | E001-0001 | Part1-111 | 510 | 50 |
| Model-001 | E001-0001 | Part2-222 | 228 | 194 |
| Model-001 | E001-0001 | Part3-333 | 92 | 80 |
| Model-001 | E001-0001 | Part4-444 | 20 | 8 |
| Model-001 | E001-0001 | Part5-555 | 150 | 94 |
| Model-002 | E001-0001 | Part1-111 | 123 | 31 |
| Model-001 | E002-0002 | Part5-555 | 2000 | 367 |

Each market performance includes a model number representing a model, an error code indicating a type of an occurred error, the part number of a part replaced in response to the error, the number of replacements that is the number of part replacements performed, and the number of end-of-life replacements among the number of part replacements performed. The number of end-of-life replacements is the number of replacements of a part replaced after the end of its lifetime.

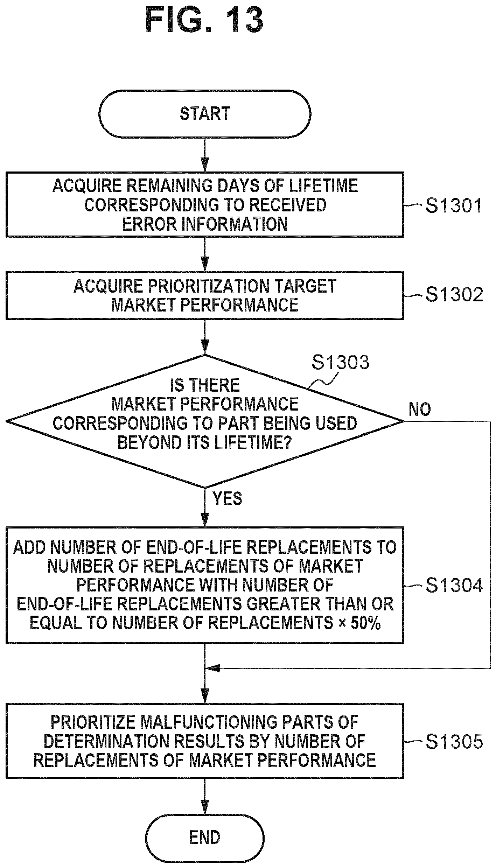

Fig. 13 is a flowchart illustrating a prioritization process in an estimation process according to the present embodiment.

Steps S1301, S1302, S1303, and S 1305 respectively correspond to steps S1201, S1202, S1203, and S1205, so that redundant descriptions thereof are omitted.

In step S1303, if there is a part being used beyond its lifetime in the market performances (YES in step S1303), the processing proceeds to step S1304, whereas if there is no such a part in the market performances (NO in step S1303), the processing proceeds to step S1305.

In step S1304, the priority determination unit 314 adds the number of end-of-life replacements to the number of replacements of the market performance with the part number that matches the part number of the part being used beyond its lifetime if the number of end-of-life replacements is greater than or equal to 50% of the number of replacements. For example, if the remaining lifetime information acquired in step S1301 corresponds to the first to fourth columns in Table E and the market performances acquired in step S1302 correspond to the first to fifth columns in Table H, in step S1303, the part number "Part3-333" with the number of remaining days of lifetime that is less than zero is identified. In step S1304, the number of replacements and the number of end-of-life replacements of the market performance of the third column with the part number that matches the part number "Part3-333" are respectively "92" and "80", and the number of end-of-life replacements is greater than 50% of the number of replacements, so that the number of replacements is calculated to be 92 + 80 = 172.

Thus, a repair part priority order considering the replacement percentage of the part being used beyond its lifetime can be presented.

While the number of end-of-life replacements is added to the number of replacements if the number of end-of-life replacements is greater than 50% of the number of replacements according to the present embodiment, another standard, such as if the number of end-of-life replacements exceeds a predetermined number, can be used.

### (Other Embodiments)

Apparatuses or systems configured by combining the above-described embodiments as appropriate and methods thereof are also encompassed within the scope of the present invention.

The present disclosure is an apparatus or a system that executes one or more pieces of software (e.g., programs) for implementing the functions of the embodiments described above. Further, methods for implementing the above-described embodiments performed by the apparatus or the system are also an aspect of the present invention. Further, the programs are supplied to the system or the apparatus via a network or various storage media, and one or more computers (CPUs, micro-processing units (MPUs)) of the system or the apparatus read the programs to one or more memories and run the read programs. Specifically, the programs or various computer-readable storage media storing the programs are also encompassed as an aspect of the present invention. Further, the present disclosure can also be implemented by a circuit (e.g., application-specific integrated circuit (ASIC)) for implementing the functions of the above-described embodiments.

The present disclosure provides a system capable of (e.g., configured and/or arranged for) identifying information about operations for recovering a malfunctioning device and information about target parts, together with a priority of addressing, including possibilities of operations other than part replacement.

While the present disclosure has been described with reference to embodiments, it is to be understood that the disclosure is not limited to the disclosed embodiments. The scope of the following claims encompasses all such modifications and equivalent structures and functions.

## Claims

1. A management system (101) comprising:
an identification means (312) for identifying, based on error information about a plurality of errors that have occurred in an image processing apparatus and error information about an error occurring in the image processing apparatus, part information about one or more parts to be addressed to clear the error occurring in the image processing apparatus; and
a provision means (315) for providing the part information identified by the identification means using a market performance for managing the number of operations previously performed to clear an error in association with an operation target part and the error,
wherein the part information about the one or more parts is provided in order of priority based on the market performance, and the part information is provided in such a form that an operation with a possibility of clearing the error and performing an unnecessary operation are distinguished from each other for each part.

2. The management system according to claim 1, wherein the part information about the one or more parts is provided in order of priority corresponding to a percentage based on the market performance.

3. The management system according to claim 1 or claim 2, wherein the provision means provides the part information as a response to a request to acquire a repair procedure for an error designated by a web browser.

4. The management system according to any one of claims 1 to 3, further comprising means for performing a filter process on the market performance based on a correct answer master managing an error and a part number of a part having a possibility of causing the error.

5. The management system according to any one of the preceding claims, wherein in providing the part information, the provision means provides the part information so that a part being used beyond its lifetime is distinguished from another and identified.

6. A method in a management system, the method comprising:
identifying, based on error information about a plurality of errors that have occurred in an image processing apparatus and error information about an error occurring in the image processing apparatus, part information about one or more parts to be addressed to clear the error occurring in the image processing apparatus; and
providing the part information identified by the identifying using a market performance for managing the number of operations previously performed to clear an error in association with an operation target part and the error,
wherein the part information about the one or more parts is provided in order of priority based on the market performance, and the part information is provided in such a form that an operation with a possibility of clearing the error and performing an unnecessary operation are distinguished from each other for each part.

7. The method according to claim 6, wherein the part information about the one or more parts is provided in order of priority corresponding to a percentage based on the market performance.

8. The method according to claim 6 or claim 7, wherein the part information is provided as a response to a request to acquire a repair procedure for an error designated by a web browser.

9. The method according to any one of claims 6 to 8, further comprising performing a filter process on the market performance based on a correct answer master managing an error and a part number of a part having a possibility of causing the error.

10. The method according to any one of claims 6 to 9, wherein in providing the part information, the part information is provided so that a part being used beyond its lifetime is distinguished from another and identified.
